# EUROPÄISCHE PATENTSCHRIFT

(11) **EP 0 617 862 B1**
(45) Veröffentlichungstag und Bekanntmachung des Hinweises auf die Patenterteilung: **28.08.1996**
(21) Anmeldenummer: 93900077.4
(22) Anmeldetag: 10.12.1992
(51) Int. Cl.: H04J 3/06, G04G 5/00, G04G 7/02

(54) **ISDN-FERNMELDENEBENSTELLENANLAGE**
ISDN BRANCH EXCHANGE
POSTE TELEPHONIQUE SUPPLEMENTAIRE ISDN

(30) Priorität: 19.12.1991 DE 4142048
(43) Veröffentlichungstag der Anmeldung: 05.10.1994
(73) Patentinhaber: SIEMENS AKTIENGESELLSCHAFT, 80333 München (DE)
(72) Erfinder: KIENBERGER, Helmut, D-81475 München (DE)
(86) Internationale Anmeldenummer: DE9201033
(87) Internationale Veröffentlichungsnummer: WO9312593

(56) Entgegenhaltungen:
- EP-A- 0 459 039
- DE-A- 4 109 150

## Beschreibung

Lokale Uhren bekannter Nebenstellenanlagen sind über entsprechende betriebstechnische Eingaben einstellbar. Lokale Uhren hoher Qualität weichen über einen längeren Zeitraum nach ihrer letzten Einstellung nur geringfügig von der tatsächlichen Uhrzeit ab. Dennoch sind auch diese lokalen Uhren von Zeit zu Zeit auf etwaige Abweichungen von der tatsächlichen Zeit zu überprüfen und gegebenenfalls nachzustellen. Diese Vorgänge sind arbeitsaufwendig und können Abweichungen zwischen der angezeigten und der tatsächlichen Uhrzeit nicht verhindern. Problematisch sind insbesondere auch abweichende Zeitanzeigen in miteinander vernetzten Anlagen.

Es sind bereits ISDN-Nebenstellenanlagen mit einer lokalen Uhr bekannt. Die von dieser Uhr gebildeten Uhrzeit- und/ oder Datumsinformationen werden digitalen Endgeräten zugeführt und auf Displays angezeigt. Bei der aus der Produktschrift der Fa. Siemens "HICOM 600 System", Ordering No. A19100-K3161- G430 -01-7600, bekannten ISDN-Fernmeldenebenstellenanlage ist vorgesehen, daß Teilnehmer mit digitalen Endgeräten durch Drücken einer Bedientaste Uhrzeit und Datum auch gesprächsbegleitend anzeigen lassen können (Seite 41). Ferner sind Nebenstellenanlagen bekannt, die eine Erfassung von Arbeitszeiten ermöglichen (Produktschrift der Fa. Siemens: "Hicom 300", Bestell-Nr. A31001-W-A10, Seite 13).

Aus der deutschen Offenlegungsschrift DE 32 16 201 Al ist bereits ein Kommunikationssystem in einem dienstintegrierten Digitalnetz (ISDN) bekannt. Die Zentrale des Kommunikationssystems enthält eine Digitaluhr hoher Genauigkeit, ersatzweise einen Umsetzer für eine am Eingang von außen empfangene Uhrzeit sowie einen Digitalkalender. Uhrzeit- und Datumsdaten werden dem eigentlichen Kommunikationssignal zugefügt und über Teilnehmeranschlußgeräte zu Anzeigeeinrichtungen weitergeleitet.

Aus der deutschen Patentschrift DE 38 22 412 C2 ist bereits ein Verfahren zum automatischen Stellen autonomer Funkuhren bekannt. Bei dem bekannten Verfahren wird ein kurzzeitiges Sender-Zeitsignal für die Korrektur der Ganggenauigkeit und einer Oszillatorfrequenz der Funkuhr benutzt. Eine Stundenangabeinformation des Sender-Zeitsignals wird dazu verwendet, den richtigen Einschaltzeitpunkt des Empfängers zu finden, um in einem besonderen Sender-Zeitsignal enthaltene Zusatzinformationen z.B. über den Signalursprung (Sender/Hauptuhr) aufzunehmen.

Die DE-A-4 109 150 beschreibt ein lokales Netzwerk mit unabhängig getakteten Knoten, wobei in jedem Knoten eine Taktquelle enthalten ist, die ein unabhängiges Taktsignal erzeugt sowie eine Schaltung, die einen Rahmen vorgegebener Länge mit der Schwingungsfrequenz der Taktquelle als Referenz erzeugt. Ein gemeinsamer Synchronisiertakt wird im Kopfteil eines Senderahmens übertragen.

Die EP-A-0 495 039 beschreibt eine Interfaceschaltung zum Anschließen eines Computers an ein Netzwerk. In dieser Interfaceschaltung erfolgt die Synchronisation einer Echtzeituhr mit Datum in regelmäßigen Abständen mittels eines Radiosignales.

Der Erfindung liegt die Aufgabe zugrunde, eine Fernmeldenebenstelle der eingangs genannten Art mit einer verbesserten Generierung von Uhrzeitinformationen anzugeben.

Die Erfindung zeichnet sich durch eine Mehrzahl von Vorteilen aus. Zum einen erübrigen sich sowohl Überprüfungsals auch Einstellvorgänge, die ihrerseits fehlerhaft sein können. Die erfindungsgemäße Lösung mindert sowohl die Abhängigkeit von der Qualität der lokalen Uhr als auch die Abhängigkeit von eventuell fehlerhaften Einstellvorgängen. In diesem Zusammenhang zeichnet sich die erfindungsgemäße Lösung auch dadurch aus, daß die Fernmeldenebenstellenanlage nur in einem geringen Umfang mit zusätzlichen Steuerprozeduren belastet wird.

Nach einer weiteren vorteilhaften Ausführungsform ist vorgesehen, daß bei einer nach einem Ausfall der die Uhrzeit- und/ oder Datumsinformationen bildenden Einheit erfolgten Wiederinbetriebnahme dieser Einheit deren Synchronisation vor Ablauf der ursprünglich vorgegebenen Zeit mit einer von den angeschalteten Übertragungsstrecken gelieferten Uhrzeitinformation erfolgt. Damit werden besonders ausgeprägte Abweichungen zwischen der intern angezeigten bzw. benutzten Zeit einerseits und der tatsächlichen Zeit andererseits vermieden.

Die Erfindung wird nun anhand der FIGUREN beschrieben. Es zeigt
- FIG 1: ein Blockschaltbild einer erfindungsgemäßen Fernmeldenebenstellenanlage, und
- FIG 2: Zeitdiagramme, die das zeitliche Zusammenwirken ausgewählter Komponenten der Fernmeldenebenstellenanlage nach FIG 1 im Zusammenhang mit der Erfindung erläutern.

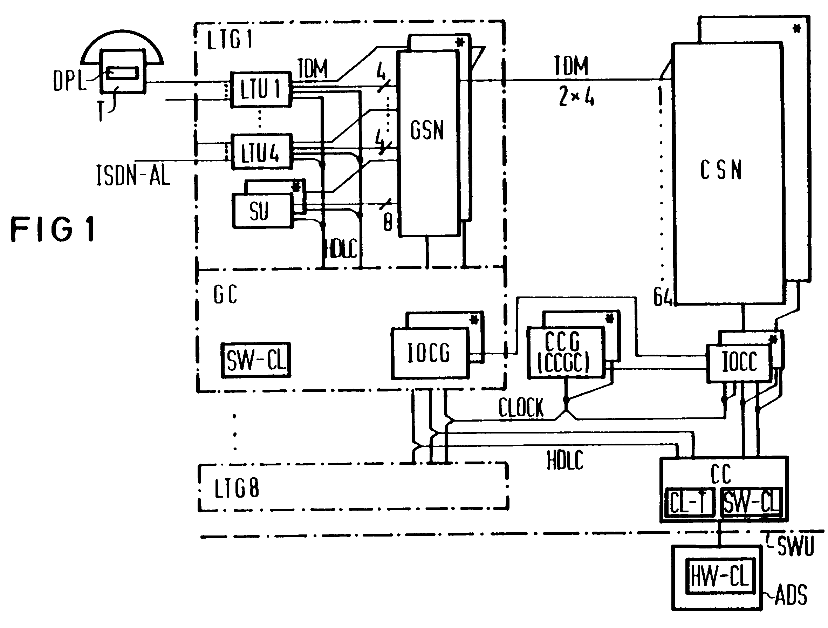

Die in FIG 1 dargestellte ISDN-Fernmeldenebenstellenanlage ist in ihrer Grundstruktur aus "Special Issue of telcom report and Siemens-Magazine COM, ISDN in the Office", Berlin und München, 1985, Seiten 56 bis 64, bekannt. Die Nebenstellenanlage besteht aus einem Durchschalteteil SWU (Switching Unit) und einer betriebstechnischen Einheit ADS (Administration and Data Server). Das Durchschalteteil SWU besteht aus mehreren Anschlußgruppen LTG1...LTG8 (Line Trunk Group), einem zentralen Koppelfeld CSN (Central Switching Network), einer Steuerung CC (Common Control) sowie aus einer zentralen Takteinrichtung CCG (Central Clock Generator).

Die Anschlußgruppen LTG1...LTG8 bestehen jeweils aus Anschlußeinheiten LTU1...LTU4, einem Gruppenkoppelfeld GSN (Group Switching Network), einer Serviceeinheit SU (Service Unit) und einer Gruppensteuerung GC (Group Control). Die Anschlußeinheiten LTU1...LTU4 bestehen aus Peripheriemodulen, die die Schnittstellenanpassungen zwischen der Nebenstellenanlage und der digitalen bzw. analogen Umwelt bilden. Als teilnehmerorientierte Geräteanschlüsse kommen beispielsweise zum Einsatz: Digitale Teilnehmeranschlußbaugruppen (Trunk Module Digital), das sind ISDN-Basisanschlüsse für digitale mono- und multifunktionale Terminals, digitale Teilnehmeranschlußbaugruppen (Subscriber Line Module Digital), das sind l-Kanal-Anschlußmodule für Endgeräte, wie beispielsweise digitale Sprachterminals und Vermittlungsterminals, analoge Teilnehmeranschlußbaugruppen (Subscriber Line Module Analog) für analoge Sprachterminals. Zur Verbindung mit öffentlichen und privaten Netzen bzw. Sondereinrichtungen dienen Leitungsanschlußmodule, nämlich digitale Leitungssatzbaugruppen (Trunk Module Digital), das sind ISDN- Basisanschlüsse für ISDN-Amts- und -Querverkehr (zwei Kanäle zu 64 kBit/s und ISDN-Signalisierung) sowie digitale Schnittstelleneinheiten DIU (Digital Interface Unit), das sind Multiplexanschlüsse (30 Kanäle zu je 64 kBit/s) mit den Betriebsarten Amts- und Querverkehr mit ISDN-Signalisierung. Stellvertretend für interne Endgeräte ist in FIG 1 ein Endgerät T mit einem Display DPL dargestellt, auf dem die Uhrzeit- und/oder Datumsinformationen dargestellt werden.

In der Fernmeldenebenstellenanlage ist ein zentraler Taktgenerator CCG vorgesehen, der alle erforderlichen Systemtakte erzeugt. Diese werden bei der in FIG 1 dargestellten Nebenstellenanlage den Einheiten IOCG und IOCC zugeführt, die über eigene Taktwiederholeinrichtungen verfügen können. Diese Einheiten leiten den Systemtakt an die Koppelfeldstufen GSN bzw. CSN weiter.

Die erfindungsgemäße Fernmeldenebenstellenanlage weist eine Uhrzeit-und/oder Datumsinformationen selbsttätig bildende Einheit HW-CL (Hardware Clock) auf, die durch ein quarzgesteuerten Uhrenbaustein gebildet ist und physikalisch in der Baugruppe ADS angeordnet ist.

Der zentralen Steuerung CC ist ein aus der Prozessdatentechnik bekanntes Programm SW-CL (Software-Clock) zugeordnet, das vom Betriebssystem der Fernmeldenebenstellenanlage realisiert wird. Dabei wird die laufende Bearbeitung der Programme (Call Processing, Tasks) unterbrochen (INTERRUPT) und die Adresse des Programms SW-CL im Betriebssystem mit dem vom Taktgenerator CCG gebildeten Systemtakt angesprungen. Der Systemtakt beträgt beispielsweise eine Sekunde. Ausgelöst durch den zugeführten Systemtakt berechnet das Programm, ausgehend von den vorliegenden Uhrzeit- und Datumsinformationen, die entsprechenden aktuellen Zeitinformationen. Der Systemtakt ist jedoch relativ zeitungenau. Daher wird die sogenannten Software-Uhr SW-CL durch die sogenannten Hardware-Uhr HW-CL synchronisiert, beispielsweise in einem Zeitintervall von 2 Minuten.

Die Hardwareeinheit HW-CL sowie die Softwareeinheit SW-CL sind über betriebstechnische Kommandos, die in die Einheit ADS eingebbar sind, synchronisierbar.

Die Softwareeinheit SW-CL kann nur einmal pro Nebenstellenanlage oder in jeder Anschlußeinheit LTU1.., LTU4 realisiert sein.

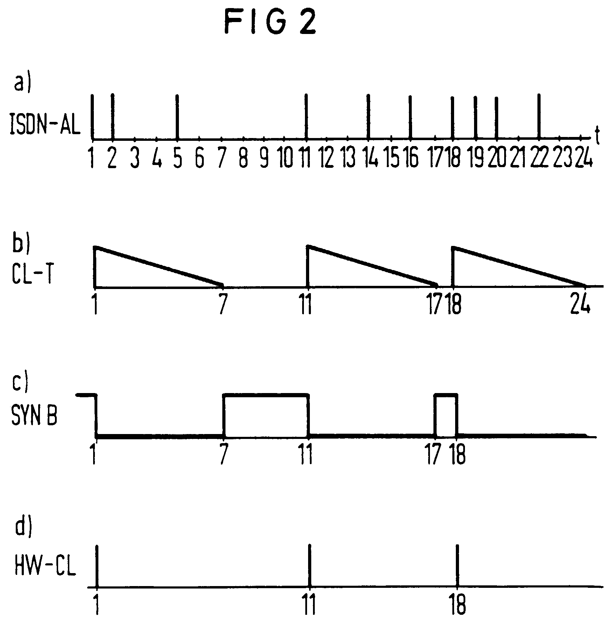

Die Fernmeldenebenstellenanlage ist - wie bereits erwähnt - über ISDN-Übertragungsstrecken ISDN-AL mit dem öffentlichen Amt bzw. mit einer weiteren Fernmeldenebenstellenanlage verbunden, die gegenüber der erfindungsgemäßen Fernmeldenebenstellenanlage hierarchisch übergeordnet ist (Master). ISDN- Meldungen werden über die Übertragungsstrecken ISDN-AL beim Auslösen (DISCONNECT, RELEASE) sowie beim Durchschalten von ISDN-Verbindungen zugeführt. Je nach Ausbauzustand der Fernmeldenebenstellenanlage bzw. nach Struktur des Verbindungsverkehrs werden der Fernmeldenebenstellenanlage eine Vielzahl derartiger ISDN-Meldungen pro Zeiteinheit zugeführt. Erfindungsgemäß wird aber lediglich ein Teil dieser Meldungen zur Synchronisation der lokalen Uhr HW-CL/SW-CL verwendet: Das der zentralen Steuerung CC der Fernmeldenebenstellenanlage zugeordnete Steuerprogramm ist dabei in der Weise ausgestaltet, daß die lokale Uhr HW-CL/SW-CL nach Ablauf vorgegebener Zeiten mit den von den angeschalteten ISDN-Übertragungsstrecken ISDN-AL gelieferten Uhrzeit- und/oder Datumsinformationen synchronisiert wird. Dabei kann ein Hardware-Zeitglied CL-T verwendet werden, das mittels betriebstechnischer Kommandos hinsichtlich der jeweils zu realisierenden Zeit (FIG 2) einstellbar ist. Ebenso kann das Zeitglied durch Software realisiert werden.

Durch die Synchronisation wird zum einen die Wahrscheinlichkeit für das Abweichen der lokal gebildeten bzw. eingestellten Zeit von der tatsächlichen Zeit vermindert, die in den ISDN- Meldungen angegeben ist. Andererseits wird die erfindungsgemäße Fernmeldenebenstellenanlage durch die, gemessen an der Zahl der eintreffenden ISDN-Meldungen, relativ wenigen Synchronisiervorgänge in einem kaum nennenswerten Umfang belastet.

Ein Ausfall sowie die Wiederinbetriebnahme der Einheit HW-CL wird durch betriebstechnische Prozeduren erkannt, beispielsweise durch einen Vergleich unmittelbar aufeinanderfolgender, von der Einheit HW-CL gebildeter Uhrzeit- und Datumsinformationen. Ein Ausfall ist durch zwei übereinstimmende Informationen und eine folgende Wiederinbetriebnahme durch eine anschließende Kombination nicht übereinstimmender Informationen gekennzeichnet. In diesem Zusammenhang ist vorgesehen, daß das der Steuerung CC der Fernmeldenebenstellenanlage zugeordnete Programm in der Weise ausgestaltet ist, daß bei einer nach einem Ausfall der die Urhzeit- und/oder Datumsinformationen bildenden Einheit HW-CCL erfolgten Wiederinbetriebnahme der Einheit HW-CL diese Einheit HW-CL vor Ablauf der ursprünglich vorgegebenen Zeit (CL-T) mit einer von den angeschalteten Übertragungsstrecken ISDN-AL gelieferten Uhrzeitinformation synchronisiert wird.

Der zeitliche Zusammenhang zwischen dem Auftreten von ISDN- Meldungen über ISDN-Übertragungsstrecken ISDN-AL und den Zeitpunkten, zu denen die lokale Uhr HW-CL synchronisiert wird, ist in FIG 2 dargestellt. In FIG 2 a sind die Zeitpunkte angegeben, zu denen der Fernmeldenebenstellenanlage über die Übertragungsstrecken ISDN-AL Meldungen zugeführt werden, die eine Uhrzeit-und/oder Datumsangabe enthalten. Dies sind im vorliegenden Ausführungsbeispiel die Zeitpunkte 1, 2, 5, 11, 14, 16, 18, 19, 20 und 22. Zeitglieder CL-T sperren nach ihrer Aktivierung die Durchschaltung von ISDN-Meldungen an die lokale Uhr HW-CL/SW-CL. Dieser Zeitraum beträgt bei dem in FIG 2 b dargestellten Ausführungsbeispiel sechs Zeiteinheiten, und zwar zwischen den Zeitpunkten 1 und 7, 11 und 17 sowie 18 und 24. Das Zeitglied CL-T wird jeweils durch die erste ISDN-Meldung nach der Deaktivierung des Zeitgliedes neu gesetzt. Bei dem in FIG 2 dargestellten Ausführungsbeispiel sind dies die Zeitpunkte 1, 11 und 18.

In FIG 2 c ist der zeitliche Zusammenhang zwischen der Aktivierung des Zeitgliedes CL-T und Synchronisierbits SYNB dargestellt, die die Hardware-Uhr HW-CL synchronisieren: SYNB hat den Wert "1", in den Zeiten, in denen das Zeitglied CL-T nicht aktiviert ist; während umgekehrt das Synchronisierbit SYNB den Wert "0" hat, in den Zeiten, in denen das Zeitglied CL-T aktiviert ist. Die lokale Uhr HW-CL/ SW-CL wird mit der Aktivierung des Zeitgliedes CL-T bzw. mit der abfallenden Flanke der in FIG 2 c dargestellten Funktion synchronisiert. Dies sind im vorliegenden Ausführungsbeispiel die Zeitpunkte 1, 11 und 18 (FIG 2 d).

Die Aktivierungszeit des Zeitgliedes CL-T beträgt bei der erfindungsgemäßen Fernmeldenebenstellenanlage beispielsweise 24 Stunden. Die in FIG 2 a schematisch dargestellten ISDN-Meldungen treten bei Fernmeldenebenstellenanlagen in aller Regel und insbesondere während verkehrsstarker Zeiten in einem erheblich größeren Umfang als in FIG 2 a dargestellt auf.

Die ISDN-Meldungen, die von einem öffentlichen Amt bzw. von einer hierarchisch übergeordneten Fernmeldenebenstellenanlage zugeführt werden, enthalten derzeit nur eine Angabe über die aktuelle Stunde und Minute, nicht jedoch über die Sekunde. Die lokale Uhr HW-CL bzw. das Programm SW-CL bilden, ausgehend von den zugeführten ISDN-Meldungen, Informationen über die aktuelle Zeit im Sekundenbereich.

## Patentansprüche

1. ISDN-Fernmeldenebenstellenanlage mit einer Uhrzeit- und/oder Dateninformationen selbsttätig bildenden Einheit (HW-CL) und mit einer Steuerung (CC), der ein Steuerprogramm zugeordnet ist, das in der Weise ausgestaltet ist, daß die die Uhrzeit- und/oder Datumsinformationen bildende Einheit (HW-CL) mit von angeschalteten ISDN-Übertragungsstrecken (ISDN-AL) gelieferten Uhrzeit- und/oder Datumsinformationen synchronisiert wird,
**dadurch gekennzeichnet,**
daß die Fernmeldenebenstellenanlage ein Zeitglied (CL-T) aufweist, das von einer, von den angeschalteten ISDN-Übertragungsstrecken (ISDN-AL) gelieferten Uhrzeit- und/oder Datumsinformationen gesetzt wird und das für einen vorgebbaren Zeitraum nach dem Setzen eine Synchronisation der Uhrzeit- und/oder Datumsinformationen selbsttätig bildenden Einheit (HW-CL) unterbindet.

2. ISDN-Fernmeldenebenstellenanlage nach Anspruch 1,
**dadurch gekennzeichnet**,
daß das der Steuerung (CC) der Fernmeldestellennebenanlage zugeordnete Programm in der Weise ausgestaltet ist, daß bei einer nach einem Ausfall der die Uhrzeit- und/oder Datumsinformationen bildenden Einheit (HW-CL) erfolgten Wiederinbetriebnahme der Uhrzeit- und/oder Datumsinformationen bildenden Einheit (HW-CL) diese vor Ablauf der ursprünglich vorgegebenen Zeit mit einer von den angeschalteten Übertragungsstrecken (ISDN-AL) gelieferten Uhrzeitinformation synchronisiert wird.

## Claims

1. ISDN telecommunications branch exchange having a unit (HW-CL) which automatically forms time and/or date information and having a Common Control (CC) to which a control program is allocated and which is designed in such a manner that the unit (HW-CL) which forms time and/or date information is synchronized to time and/or date information supplied by ISDN transmission paths (ISDN-AL) which are connected, characterized in that the telecommunications branch exchange has a timer (CL-T) which is set by time and/or date information supplied by the ISDN transmission paths (ISDN-AL) which are connected, and which, for a predetermined time period after being set, suppresses synchronization of the unit (HW-CL) which automatically forms time and/or date information.

2. ISDN telecommunications branch exchange according to Claim 1, characterized in that the program which is allocated to the Common Control (CC) of the telecommunications branch exchange is designed in such a manner that, when the unit (HW-CL) which forms time and/or date information is brought back into use following a failure of said unit (HW-CL) which forms time and/or date information, said unit is synchronized, before the originally predetermined time has elapsed, to time information supplied by the transmission paths (ISDN-AL) which are connected.

## Revendications

1. Central privé RNIS de télécommunication comportant une unité (HW-CL) formant automatiquement des informations d'heure et/ou de dates et une commande (CC), à laquelle est associé un programme de commande formé de telle sorte que l'unité (HW-CL) formant les information d'heure et/ou de date soit synchronisée avec des informations d'heure et/ou de date fournies par des voies (ISDN-AL) de transmission RNIS connectées,
caractérisé en ce que
le central privé de télécommunication comporte un élément (CL-T) de temporisation, qui est positionné par une information d'heure et/ou de date fournie par les voies (ISDN-AL) de transmission RNIS connectées et qui arrête, pour un laps de temps pouvant être prescrit, après le positionnement, une synchronisation de l'unité (HW-CL) formant automatiquement des informations d'heure et/ou de date.

2. Central privé RNIS de télécommunication suivant la revendication 1,
caractérisé en ce que
le programme associé à la commande (CC) du central privé de télécommunication est formé de telle sorte qu'en cas d'une remise en service de l'unité (HW-CL) formant des informations d'heure et/ou de date, effectuée après une panne de l'unité (HW-CL) formant les informations d'heure et/ou de date, celle-ci est synchronisée, avant que le temps prescrit à l'origine soit écoulé, avec une information d'heure fournie par les voies (ISDN-AL) de transmission connectées.
